# FASCICULE DE BREVET EUROPEEN

(11) **EP 2 082 374 B1**
(45) Date de publication et mention de la délivrance du brevet: **08.08.2018**
(21) Numéro de dépôt: 07866429.9
(22) Date de dépôt: 24.10.2007
(51) Int. Cl.: G06T 17/00, G06F 17/50

(54) **PROCEDE ET DISPOSITIFS D'AIDE A LA MODELISATION D'OBJETS 3D**
VERFAHREN UND HILFE ZUR MODELLIERUNG VON 3D-OBJEKTEN
METHOD AND AIDS FOR MODELLING 3D OBJECTS

(30) Priorité: 27.10.2006 FR 0654606
(43) Date de publication de la demande: 29.07.2009
(73) Titulaire: Airbus Operations, 31060 Toulouse (FR)
(72) Inventeur: CAZALS, Olivier, 31700 Daux (FR)
(74) Mandataire: Santarelli
(86) Numéro de dépôt international: PCT/FR2007/001755
(87) Numéro de publication internationale: WO 2008/056054

(56) Documents cités:
- LEE S H: "A CAD-CAE integration approach using feature-based multi-resolution and multi-abstraction modelling techniques" août 2005 (2005-08), COMPUTER AIDED DESIGN, ELSEVIER PUBLISHERS BV., BARKING, GB, PAGE(S) 941-955 , XP004823081 ISSN: 0010-4485 abrégé
- LEDERMANN ET AL: "Associative parametric CAE methods in the aircraft pre-design" AEROSPACE SCIENCE AND TECHNOLOGY, EDITIONS SCIENTIFIQUES ET MEDICALES ELSEVIER, vol. 9, no. 7, octobre 2005 (2005-10), pages 641-651, XP005107752 ISSN: 1270-9638
- XU, X.Y.; WANG Y. Y.: "Multi-model technology and its applications in the integration of CAD/CAM/CAE" JOURNAL OF MATERIALS PROCESSING TECHNOLOGY, 31 décembre 2002 (2002-12-31), pages 563-567, XP002439704

## Description

La présente invention concerne la conception d'objets tridimensionnels (3D) et, plus particulièrement, un procédé et des dispositifs d'aide à la modélisation d'objets 3D permettant l'obtention d'un modèle instancié d'un objet 3D à partir d'un modèle générique de cet objet et de modèles spécifiques d'éléments de cet objet ou d'un modèle spécifique d'un second objet comprenant une partie de cet objet.

La conception d'ensembles complexes, tels que des avions, exige le positionnement relatif de plusieurs éléments. Le positionnement d'un premier élément par rapport à un second fait généralement intervenir des corps de métier différents. Par exemple, le positionnement d'un moteur sur une aile d'avion exige la consultation de motoristes, de mécaniciens, d'aérodynamiciens, d'acousticiens, et de spécialistes de nombreux autres corps de métier.

De façon traditionnelle, l'étude de positionnement est organisée sous forme d'analyses partielles successives. Les spécialistes des corps de métier dont les conséquences liées au choix du positionnement sont les plus importantes, selon des critères prédéterminés, sont chargés de commencer l'étude et de proposer une première position. L'étude est alors transmise à un spécialiste d'un autre corps de métier qui va la compléter, et ainsi de suite. Lorsque tous les corps de métier ont participés à l'étude, le dossier est généralement retransmis à chacun d'eux pour valider le résultat. Si le positionnement a été modifié au cours de l'étude et que certains critères, pour un corps de métier particulier, ne sont plus remplis, il est nécessaire de modifier le positionnement et de répéter la succession d'analyses partielles, auprès de tous les corps de métier, pour valider la nouvelle position.

De façon générale, ces études se fondent sur des modèles numériques 3D des objets 3D réels. Cependant, il est fréquent, au cours de ce processus, que les contraintes imposées soient telles que la forme de l'objet à positionner doit être modifiée. Si cet objet est conçu par un tiers, il est alors nécessaire de faire une demande auprès de ce tiers pour une version particulière du modèle numérique de cet objet. L'analyse est donc suspendue jusqu'à la réception du nouveau modèle. Si la forme de l'objet doit être modifiée plusieurs fois, il en résulte des délais importants.

De plus, un modèle spécifique reçu d'un tiers est en général un modèle statique ne permettant pas l'automatisation de certaines tâches ou de certains calculs nécessaires pour certaines études.

Dans l'article intitulé "A CAD-CAE integration approach using feature-based multi-resolution and multi-abstraction modelling techniques", août 2005 (2005-08), COMPUTER AIDED DESIGN, ELSEVIER PUBLISHERS BV., BARKING, GB, PAGE(S) 941-955, l'auteur, Sang Hun Lee, présente la création d'un modèle unique d'objet (modèle maître) à partir duquel peuvent être dérivés des modèles de cet objet pour des études de conception (CAD, sigle de *Computer Aided Design* en terminologie anglo-saxonne) et d'analyse (CAE, sigle de *Computer Aided Engineering* en terminologie anglo-saxonne). Le modèle maître est un modèle comprenant plusieurs niveaux de résolution et plusieurs niveaux d'abstraction permettant l'extraction de modèles CAD et CAE.

Dans l'article intitulé *"*Associative parametric CAE methods in the aircraft pre-design", AEROSPACE SCIENCE AND TECHNOLOGY, EDITIONS SCIENTIFIQUES ET MEDICALES ELSEVIER, vol. 9, no.7, octobre 2005 (2005-10), pages 641-651, les auteurs, Ledermann et al., présentent l'utilisation de méthodes CAE pour la conception d'aéronefs. Plus précisément, il est proposé d'utiliser des modèles CAD hiérarchiques, paramétriques et associatifs.

Alors que l'utilisation de modèle générique peut, dans certaines circonstances, permettre une pré-étude, le manque de précision d'un modèle générique ne permet généralement pas de conduire une étude précise à terme.

Il existe donc un besoin pour créer des modèles instanciés, réalistes et paramétrables, en particulier pour étudier le positionnement des objets auxquels ils sont associés par rapport à d'autres objets.

L'invention permet de résoudre au moins un des problèmes exposés précédemment.

L'invention est ainsi définie par les revendications indépendantes en annexe. Avantageusement, le au moins un paramètre du modèle générique est adapté à la au moins une donnée extraite du au moins un modèle spécifique pour construire le modèle instancié.

De préférence, le modèle générique est un modèle dynamique et le modèle spécifique est un modèle statique.

La création d'un modèle instancié d'un objet 3D à partir d'un modèle générique permet l'obtention d'un modèle dynamique adapté à interagir avec un logiciel de conception. En particulier, un modèle instancié permet une modification des paramètres de ce modèle et permet l'automatisation de certaines opérations telles que des calculs, notamment des estimations de surfaces ou de courbes.

Selon un mode de réalisation particulier, la au moins une donnée extraite est une portion de courbe caractérisant une partie de l'objet à modéliser qui peut être facilement extraite du au moins un modèle spécifique, directement ou par l'intermédiaire d'un logiciel de conception. Cette portion de courbe est, par exemple, l'intersection d'une partie du second objet avec un plan prédéterminé.

Toujours selon un mode de réalisation particulier, le procédé comprend en outre les étapes suivantes,
- détermination des extrema de la portion de courbe extraite du au moins un modèle spécifique ; et,
- adaptation de la portion de courbe du modèle générique correspondant à la portion de courbe extraite du au moins un modèle spécifique de telle sorte que les extrema de la portion de courbe du modèle générique soient similaires aux extrema de la portion de courbe extraite du au moins un modèle spécifique,
pour ajuster rapidement et précisément la portion de courbe du modèle générique sur la portion de courbe extraite du au moins un modèle spécifique.

De préférence, l'étape d'adaptation comprend en outre une étape d'ajustement d'au moins un point intermédiaire situé entre les extrema de la portion de courbe du modèle générique pour affiner l'ajustement de la portion de courbe du modèle générique sur la portion de courbe extraite du au moins un modèle spécifique.

De préférence, l'étape d'adaptation comprend également une étape de détermination d'au moins une tangente à ladite portion de courbe extraite du au moins un modèle spécifique en au moins un point de la portion de courbe du modèle générique, toujours pour affiner l'ajustement de la portion de courbe du modèle générique sur la portion de courbe extraite du au moins un modèle spécifique.

Selon un mode de réalisation particulier, le au moins un second objet correspond au premier objet ou est une partie du premier objet permettant ainsi de créer un modèle instancier d'un objet à partir d'un modèle spécifique de l'objet ou d'un ou de plusieurs éléments de cet objet.

Toujours selon un mode de réalisation particulier, le procédé comprend en outre une étape d'importation d'au moins une donnée, la donnée importée étant mémorisée comme paramètre du modèle instancié permettant ainsi l'échange de données entre les modèles instanciés.

Toujours selon un mode de réalisation particulier, le premier objet est un objet 3D tel qu'une nacelle, un moteur ou un ensemble propulsif.

L'invention a aussi pour objet un procédé pour un dispositif comprenant des moyens adaptés à la mise en oeuvre de chacune des étapes du procédé décrit précédemment.

L'invention a également pour objet un programme d'ordinateur comprenant des instructions adaptées à la mise en oeuvre de chacune des étapes du procédé décrit précédemment.

D'autres avantages, buts et caractéristiques de la présente invention ressortent de la description détaillée qui suit, faite à titre d'exemple non limitatif, au regard des dessins annexés dans lesquels :
- la figure 1 montre un exemple d'appareil permettant d'implémenter l'invention ;
- la figure 2 illustre certaines étapes mise en oeuvre par l'invention pour obtenir un modèle instancié d'une nacelle à partir d'un modèle spécifique de nacelle et d'un modèle générique de nacelle. ;
- la figure 3 illustre schématiquement un exemple de mise en oeuvre d'un algorithme d'adaptation d'un profil mémorisé dans un modèle générique à un profil mémorisé dans un modèle spécifique d'un objet 3D ;
- la figure 4 présente un mécanisme permettant d'instancier un modèle générique à partir d'un modèle instancié ;
- la figure 5 illustre certaines étapes mise en oeuvre par l'invention pour obtenir un modèle instancié d'un ensemble propulsif à partir d'un modèle générique d'un ensemble propulsif motoriste, d'un modèle spécifique de nacelle et d'un modèle spécifique de moteur ; et,
- la figure 6 illustre un autre exemple dans lequel un modèle instancié d'une nacelle, un modèle instancié d'un moteur et un modèle instancié d'un ensemble propulsif sont obtenus à partir d'un modèle spécifique d'un ensemble propulsif.

Le procédé et les dispositifs selon l'invention sont un outils d'aide à la modélisation d'un objet 3D à partir d'un modèle générique de cet objet et de modèles spécifiques d'éléments de cet objet ou de modèles spécifiques d'autres objets comprenant une partie de cet objet, destiné, en particulier, à la réalisation d'études d'installations motrices sur des avions conventionnels ou non. Selon une implémentation particulière, le procédé utilise le logiciel de conception 3D CATIA. La description suivante illustre la mise en oeuvre de l'invention dans ce contexte cependant, il doit être compris que l'invention ne se limite pas à cette implémentation particulière.

Catia, développé par la société française Dassault Systèmes et commercialisé par la société IBM, est un logiciel de conception assistée par ordinateur (CAO), orienté 3D dans lequel toutes les étapes du développement d'un produit peuvent être gérées.

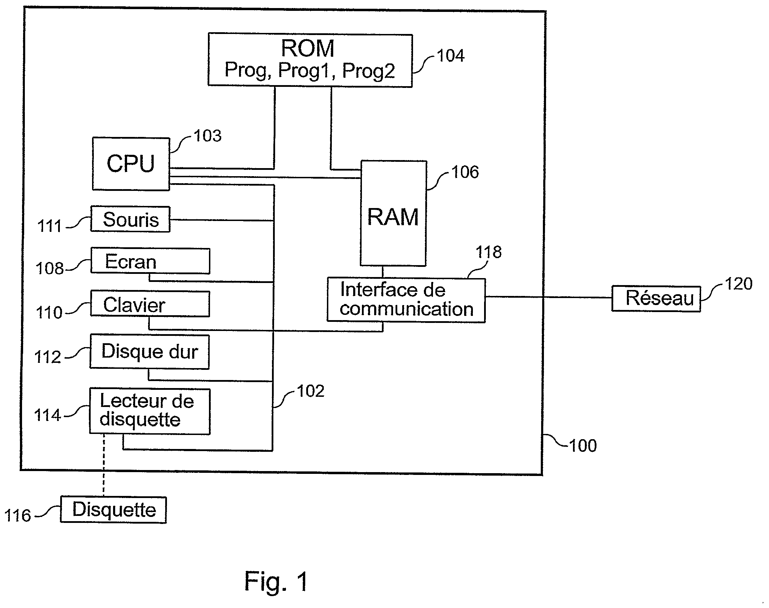

La figure 1 illustre un exemple d'appareil 100 adapté à mettre en oeuvre l'invention, tel qu'un micro-ordinateur ou une station de travail.

De préférence, l'appareil 100 comporte un bus de communication 102 auquel sont reliés,
- une unité centrale de traitement 103 telle qu'un microprocesseur ;
- une mémoire morte 104 ou *Read Only Memory* (ROM), pouvant comporter un ou plusieurs programmes "Prog", "Prog1" et "Prog2" ;
- une mémoire vive 106 ou *Random Access Memrory* (RAM), comportant des registres adaptés à mémoriser des variables et des paramètres créés et modifiés au cours de l'exécution des programmes précités ; et
- une interface de communication 118 reliée à un réseau de communication distribué 120, par exemple le réseau intranet, l'interface étant apte à transmettre et à recevoir des données.

L'appareil 100 peut disposer optionnellement de l'un, de plusieurs ou de tous les dispositifs suivants :
- un écran 108 permettant de visualiser des données et/ou de servir d'interface graphique avec l'utilisateur qui pourra interagir avec les programmes selon l'invention, à l'aide d'un clavier 110 ou de tout autre moyen tel qu'un dispositif de pointage, comme par exemple une souris 111 ou un crayon optique, un écran tactile ou une télécommande ;
- un disque dur 112 pouvant comporter des programmes et/ou des données, notamment des données traitées ou à traiter selon l'invention ;
- un lecteur de disquette 114 adapté à recevoir une disquette 116 et à y lire ou à y écrire des données traitées ou à traiter selon l'invention ; et,
- un lecteur de cartes mémoire adapté à y lire ou à y écrire des données, notamment des données traitées ou à traiter selon l'invention.

Le bus de communication permet la communication et l'interopérabilité entre les différents éléments inclus dans l'appareil 100 ou reliés à lui. La représentation du bus n'est pas limitative et, notamment, l'unité centrale est susceptible de communiquer des instructions à tout élément de l'appareil 100, directement ou par l'intermédiaire d'un autre élément de l'appareil 100.

Le code exécutable du ou des programme(s) permettant à l'appareil 100 de mettre en oeuvre les processus selon l'invention, peut être stocké, par exemple, dans le disque dur 112 ou en mémoire morte 104.

Selon une variante, la disquette 116, peut contenir des données ainsi que le code exécutable des programmes précités qui, une fois lu par l'appareil 100, peuvent être stockés dans le disque dur 112.

Alternativement, le code exécutable des programmes peut être reçu par l'intermédiaire du réseau de communication 120, via l'interface 118, pour être stocké de façon identique à celle décrite précédemment.

Les disquettes peuvent être remplacées par tout support d'information tel que, par exemple, un disque compact (CD-ROM) ou une carte mémoire. De manière générale, un moyen de stockage d'information, lisible par un ordinateur ou par un microprocesseur, intégré ou non à l'appareil, éventuellement amovible, est adapté à mémoriser un ou plusieurs programmes dont l'exécution permet la mise en oeuvre du procédé selon l'invention.

De manière plus générale, le ou les programmes pourront être chargés dans un des moyens de stockage de l'appareil 100 avant d'être exécutés.

L'unité centrale 103 contrôle l'exécution des instructions ou portions de code logiciel du ou des programme(s) selon l'invention, instructions qui sont stockées dans le disque dur 112, dans la mémoire morte 104 ou dans les autres éléments de stockage précités. Lors de la mise sous tension, le ou les programmes stockés dans une mémoire non volatile, par exemple le disque dur 112 ou la mémoire morte 104, sont transférés dans la mémoire vive 106 (RAM), qui contient alors le code exécutable du ou des programme(s) selon l'invention, ainsi que des registres pour mémoriser les variables et les paramètres nécessaires à la mise en oeuvre de l'invention.

Il convient de noter que l'appareil comportant le dispositif selon l'invention peut également être un appareil programmé. Les instructions du ou des programme(s) mettant en oeuvre l'invention peuvent, par exemple, être implémentées dans un circuit intégré programmable ou spécifique (*Application-Specific Integrated Circuit,* ASIC).

En phase de conception, le bureau d'étude dispose d'une part de modèles génériques de nacelle, de moteur et d'ensemble propulsif et d'autre part de modèles spécifiques de nacelle, de moteur et d'ensemble propulsif proposés par les fournisseurs. Alors que les modèles génériques ne peuvent pas être utilisés en raison du manque de données précises, les modèles spécifiques présentent l'inconvénient de ne pas être « dynamiques » c'est-à-dire qu'ils ne sont pas facilement modifiables et qu'ils ne permettent pas l'automatisation de certains calculs tels que les calculs de masses ou de cotations et qu'ils ne permettent pas certaines estimations telles que les cônes d'éclatement du moteur. Ainsi, selon l'invention, les caractéristiques essentielles d'un modèle spécifique sont extraites et ajoutées à un modèle générique afin d'obtenir un modèle instancié, paramétrable et dynamique, utilisable pour des études telles que le positionnement d'un ensemble propulsif sur une aile d'avion.

Un modèle spécifique reçu d'un fournisseur est généralement un fichier lié à un logiciel de CAO particulier, c'est-à-dire un fichier décrivant des points, des courbes et des volumes. Ainsi, les caractéristiques géométriques des modèles spécifiques proposés par les fournisseurs sont accessibles, notamment à travers le logiciel CATIA.

Les modèles génériques des objets à modéliser sont de préférence stockés sous forme de *template,* c'est à dire de modèles paramétriques liés à une géométrie 3D d'une pièce ou d'un ensemble de pièces, permettent à un utilisateur non spécialiste du logiciel de conception assisté par ordinateur de retrouver et de modifier facilement un paramètre en ne connaissant que le résultat qu'il souhaite atteindre. Ainsi, l'utilisation de modèles paramétrique permet d'obtenir une interface simplifiée pour modifier les paramètres sans modifier le code source. Cette interface simplifiée peut se présenter, par exemple, sous forme de fenêtres de dialogue permettant la visualisation et la modification de paramètres dans des champs prédéterminés. L'utilisation de modèles paramétriques permet également d'automatiser certains calculs ou certaines tâches tels que la cotation automatique ou le calcul de masses.

Un modèle paramétrique de nacelle permet de définir, par exemple,
- la forme extérieure de la nacelle ;
- la forme de la tuyère ;
- le corps central de la tuyère ;
- les capots du moteur et leur axe de rotation ; et,
- les inverseurs de poussée et leur axe de rotation.

Ces données peuvent être mémorisées, par exemple, sous formes de points et de profils. Les profils sont, de préférence, définis par un ensemble de points et de tangentes en ces points permettant de les relier par des courbes. Chaque profil correspond à l'intersection d'une courbe représentant un élément de l'objet associé au modèle avec un plan prédéterminé.

Chaque modèle paramétrique comprend en outre, de préférence, un référentiel, permettant un positionnement d'un objet par rapport à un second. Par exemple, le référentiel d'une nacelle peut être un repère dont l'origine se situe sur l'axe de la nacelle, à une distance prédéterminée du point le plus en avant de la nacelle. L'axe des X peut être l'axe de la nacelle, l'axe des Y peut être l'axe perpendiculaire à l'axe des X, dans le plan horizontal, et l'axe des Z peut être l'axe perpendiculaire à l'axe des X, dans le plan vertical.

Ainsi, le profil d'une nacelle peut être défini selon un plan X-Y et selon un plan X-Z. Dans un mode préféré, deux profils sont déterminés dans le plan X-Z, un profil bas et un profil haut, les moteurs d'avion n'étant généralement pas symétriques selon le plan X-Y.

Plusieurs modèles paramétriques d'un même objet 3D peuvent être créés selon les besoins de l'étude. Par exemple, un modèle paramétrique peut être créé avec toutes les informations essentielles d'une nacelle tandis qu'un autre modèle paramétrique peut être créé avec toutes ces informations essentielles de la nacelle et comprenant en outre des formules de calcul de masses et de risques liés au positionnement.

De même, un modèle paramétrique peut être lié à un ou à plusieurs objets 3D. Par exemple, un modèle paramétrique peut être utilisé pour une nacelle et un autre pour un moteur ou un modèle paramétrique peut être utilisé pour modéliser un ensemble propulsif comprenant une nacelle et un moteur.

Dans la suite de la description, un modèle spécifique fait référence à un modèle « statique » d'un objet 3D qui peut être considéré comme un dessin vectoriel défini par un ensemble de points, de traits et de surfaces. Un modèle spécifique est typiquement une représentation d'un objet reçu d'un fournisseur. Un modèle générique est un modèle paramétrable dont les valeurs n'ont pas été initialisées ou ont été initialisées avec des valeurs par défaut. Les valeurs des paramètres d'un modèle générique peuvent donc être quelconques ou peuvent être prédéterminées de façon à être aussi proche que possible des modèles spécifiques. Un modèle instancié est un modèle générique dont certaines valeurs ont été initialisée. Un modèle instancié est un modèle « dynamique » permettant l'automatisation de certaines tâches ou de certains calculs et dont les paramètres peuvent être modifiés. Un modèle instancié est lié dynamiquement avec d'autres modèles instanciés pour, par exemple, automatiser des calculs et mettre à jour des valeurs, notamment des valeurs de cotation. Un modèle générique peut donc être considéré comme le squelette d'un modèle instancié.

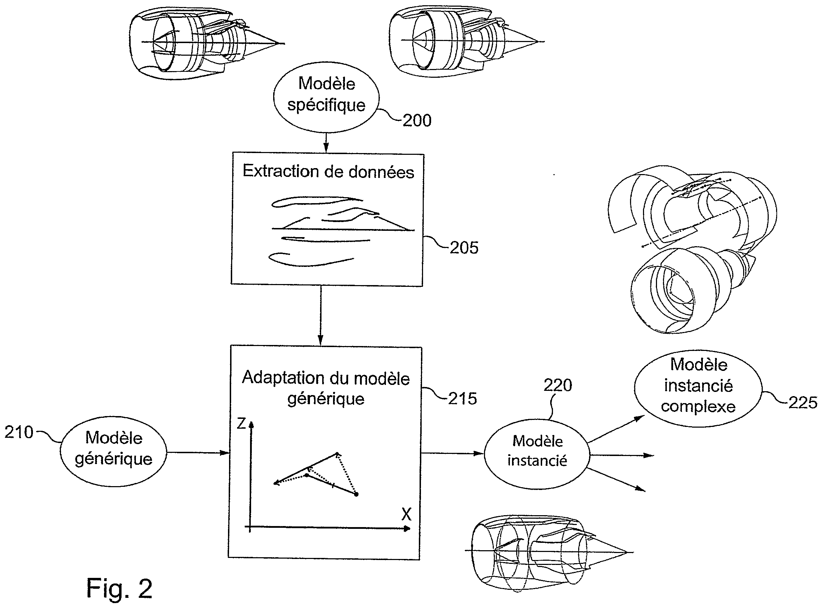

La figure 2 illustre certaines étapes mise en oeuvre par l'invention pour obtenir un modèle instancié d'une nacelle à partir d'un modèle spécifique de nacelle et d'un modèle générique de nacelle. Le modèle spécifique (200), reçu d'un fabriquant, est analysé de telle sorte que les données essentielles soient extraites (étape 205). Dans cet exemple, les données essentielles comprennent, en particulier, le profil de la nacelle selon des plans prédéterminés. Si ces profils ne sont pas directement accessibles dans le modèle spécifique, ils peuvent être extraits selon une fonction standard du logiciel de conception. Les données essentielles sont définies par la nature des paramètres du modèle générique. L'extraction de ces données peut donc être automatique, selon le modèle générique utilisé, ou manuelle.

Les données extraites du modèle spécifiques sont utilisées pour adapter les paramètres d'un modèle générique (210) de l'objet 3D selon un algorithme d'adaptation décrit dans la suite de la description (215). Le modèle générique adapté selon les données extraites du modèle spécifique forme un modèle instancié (220). Le modèle instancié peut être utilisé en tant que tel dans le logiciel de conception. Les valeurs du modèle instancié peuvent également être utilisées pour créer des modèles instanciés complexes (225). Par exemple, les valeurs d'un modèle instancié de nacelle peuvent être utilisées pour instancier un modèle générique d'un ensemble propulsif dont les valeurs liées au moteur peuvent avoir été ou pourront être instanciées selon la même méthode.

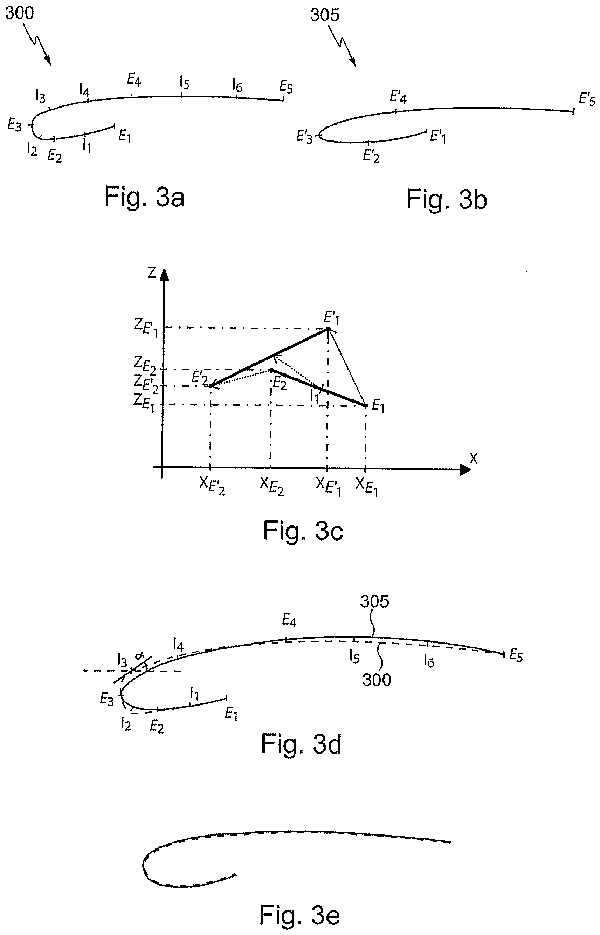

La figure 3 illustre un exemple de l'algorithme d'adaptation d'un profil mémorisé dans un modèle générique à un profil mémorisé dans un modèle spécifique d'un objet 3D. La figure 3a illustre un profil prédéterminé (300) d'un modèle générique de nacelle alors que la figure 3b illustre le profil (305) du modèle spécifique, correspondant au profil 300 du modèle générique. Dans cet exemple, la courbe à adapter est un profil supérieur de nacelle c'est-à-dire la courbe formée par l'intersection de la nacelle avec un plan défini par les axes X et Z. Le profil 300 du modèle générique est ici caractérisé par cinq extrema (E₁ à E₅) et six points intermédiaires (I₁ à I₆) déterminés selon des plans orthogonaux au plan de coupe du profil, ainsi que par les angles des tangentes en chacun de ces points. Le profil 300 n'est donc pas mémorisé en tant que tel dans le modèle générique mais seuls les points et les angles des tangentes mentionnés sont mémorisés. Les extrema (E'₁ à E'₅) du profil 305 du modèle spécifique sont de préférence déterminés automatiquement par le logiciel de conception. Lorsque les extrema du profil extrait du modèle spécifique ont été trouvés, une transformation géométrique est appliquée sur le profil 300 du modèle générique, comme indiqué sur la figure 3c, de telle sorte que les extrema du profil du modèle générique correspondent aux extrema du profil du modèle spécifique. Une transformation géométrique différente est appliquée à chaque partie du profil définie par deux extrema voisins.

Ainsi, dans l'exemple illustré sur la figure 3c, les extrema E₁ et E₂ ayant pour coordonnées (x_{E1};z_{E1}) et (x_{E2};z_{E2}), respectivement, prennent les valeurs des extrema E'₁ et E'₂ ayant pour coordonnées (x_{E'1};z_{E'1}) et (x_{E'2};z_{E'2}), respectivement. Les nouvelles coordonnées du point intermédiaire I₁ sont calculées automatiquement selon la position des extrema, l'angle de la tangente en ces points et les tensions des tangentes en ces points (la tension d'une tangente détermine l'influence de la tangente sur les points du voisinage du point où se situe la tangente). Cette fonction de déformation de courbe étant couramment utilisée dans les logiciels de conception assistée par ordinateur n'est pas détaillée ici.

La figure 3d montre la superposition des profils 300 et 305 après une première adaptation liée à la superposition des extrema.

Si les points intermédiaires du profil adapté du modèle générique ne sont pas situés sur le profil du modèle spécifique, ou à proximité du profil du modèle spécifique, l'utilisateur peut déplacer ces points intermédiaires. Selon une implémentation particulière, le déplacement des points intermédiaires est réalisé par un simple incrément ou décrément qui déplace un point intermédiaire sélectionné le long du profil du modèle générique, c'est-à-dire en déplaçant dans un sens ou dans l'autre le plan associé au point intermédiaire. L'utilisateur peut également modifier l'angle et la tension de la tangente des extrema et des points intermédiaires pour améliorer la superposition du profil adapté du modèle générique sur le profil du modèle spécifique. Par exemple, l'utilisateur peut déplacer le point I₃ et ajuster la tangente (angle et tension) en ce point de façon à rapprocher les portions de courbes situées entre les extrema E₃-E₄ et E'₃-E'₄.

La figure 3e illustre les profils 300 et 305 après adaptation des extrema, des points intermédiaires et des angles et des tensions des tangentes.

La méthode décrite précédemment, en référence à la figure 3, est de préférence répétée pour tous les profils communs du modèle générique et du modèle spécifique. Alternativement, cette méthode est répétée pour tous les profils d'un ensemble de profils sélectionnés. Par exemple, pour un modèle de nacelle, cette méthode est répétée pour trois profils extérieurs, différents, de la nacelle, pour le profil de la tuyère, pour le profil du corps central de la tuyère, pour le profil des capots du moteur et leur axe de rotation et pour le profil des inverseurs de poussée et leur axe de rotation.

Lorsque tous les profils, ou tous les profils sélectionnés, du modèle générique ont été adaptés, le modèle générique devient un modèle instancié.

Le modèle instancié peut être utilisé directement dans le logiciel de conception. Il peut également être utilisé pour instancier un modèle générique différent, par exemple un modèle générique plus complexe, en copiant les valeurs des variables communes au modèle instancié et au modèle générique.

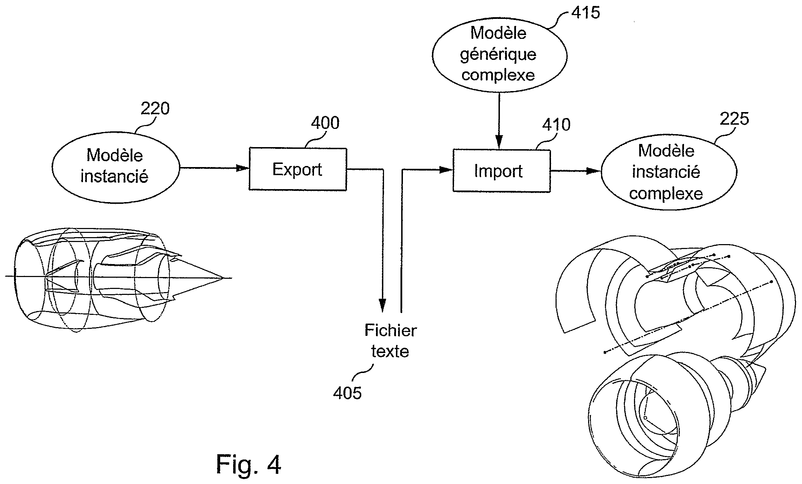

Pour instancier un modèle générique à partir d'un modèle instancié différent, une solution consiste à exporter les données (ou une partie des données) du modèle instancié qui correspondent aux variables communes du modèle instancié et du modèle générique, sous forme de texte, et à les importer dans le modèle générique devant être instancié. La figure 4 illustre ce mécanisme. Les données du modèle instancié (220) sont exportées (étape 400) sous forme de texte, par exemple sous forme de fichier texte (405). Les données exportées (405) sont ensuite importées (étape 410) et mémorisées dans un autre modèle générique, référencé comme modèle générique complexe (415) afin de le distinguer du modèle générique initial, pour former un modèle instancié complexe (425). Il est aussi possible selon ce même mécanisme d'importer les données d'un modèle instancié complexe dans un modèle générique plus simple. L'utilisateur peut, de préférence, choisir les paramètres ou les profils à exporter et à importer.

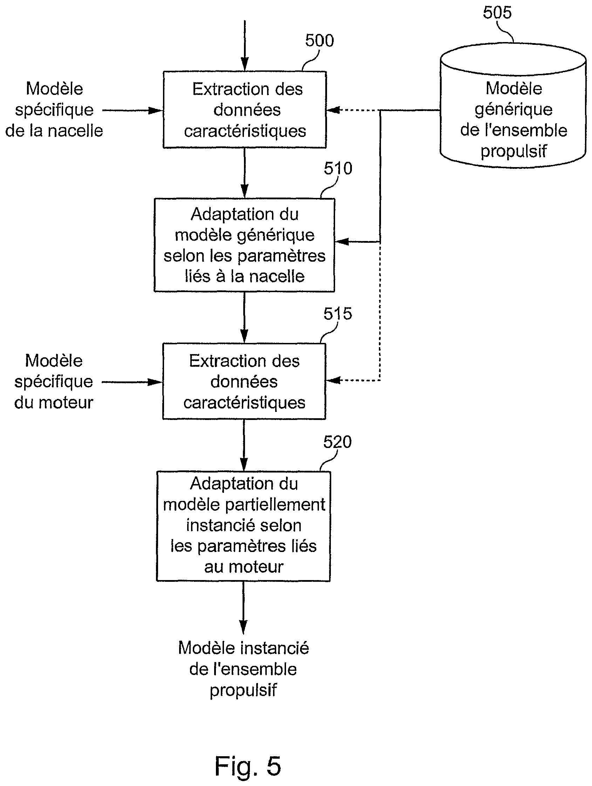

Un modèle instancié d'un objet peut ainsi être créé à partir de plusieurs modèles spécifiques d'éléments de cet objet. Par exemple, un modèle instancié d'un ensemble propulsif peut être créé à partir d'un modèle générique d'un ensemble propulsif, d'un modèle spécifique de nacelle et d'un modèle spécifique de moteur, comme illustré sur la figure 5.

Un modèle paramétrique de moteur permet de définir, par exemple,
- les turbines ;
- la chambre de combustion ;
- le cône d'entrée d'air ; et
- les points d'attache avant et arrière.

L'utilisation des repères des modèles paramétriques de la nacelle et du moteur ainsi que des paramètres contenus dans ces modèles permet de positionner le moteur par rapport à la nacelle lorsque les modèles génériques correspondants sont instanciés, c'est-à-dire lorsque des valeurs sont données aux paramètres permettant ce positionnement.

La figure 5 illustre certaines étapes mise en oeuvre par l'invention pour obtenir un modèle instancié d'un ensemble propulsif à partir d'un modèle générique d'un ensemble propulsif motoriste, d'un modèle spécifique de nacelle et d'un modèle spécifique de moteur.

Selon l'étape 500, les courbes, ou profils, et les points caractéristiques d'une nacelle sont extraits du modèle spécifique d'une nacelle. Les courbes et les points caractéristiques d'une nacelle peuvent être déterminés par l'utilisateur selon les paramètres du modèle générique utilisé de l'ensemble propulsif, choisi par l'utilisateur dans une base de données 505, ou peuvent être déterminés automatiquement selon les paramètres de ce modèle générique sélectionné par l'utilisateur. Le modèle générique sélectionné est ensuite adapté aux données caractéristiques extraites du modèle spécifique de la nacelle (étape 510). Dans cette étape, seuls les paramètres liés à la nacelle sont modifiés. L'adaptation du modèle générique aux courbes extraites du modèle spécifique de la nacelle est, de préférence, réalisée selon la méthode décrite précédemment, par référence à la figure 3. De la même façon, selon l'étape 515, les courbes, ou profils, et les points caractéristiques d'un moteur sont extraits du modèle spécifique d'un moteur. A nouveau, les courbes et les points caractéristiques d'un moteur peuvent être déterminés par l'utilisateur selon les paramètres du modèle générique sélectionné ou peuvent être déterminés automatiquement selon ce modèle. Le modèle générique, partiellement instancié précédemment selon les caractéristiques de la nacelle, est ensuite adapté aux données caractéristiques extraites du modèle spécifique du moteur (étape 520). Ici encore, l'adaptation des courbes extraites du modèle spécifique du moteur est, de préférence, réalisée selon la méthode décrite précédemment. Dans cette étape, seuls les paramètres liés au moteur sont modifiés.

Il convient de noter que les étapes 515 et 520 peuvent être exécutées indifféremment après ou avant les étapes 500 et 510. Il est également possible de n'exécuter que les étapes 500 et 510 ou les étapes 515 et 520 selon les besoins liés à l'utilisation du modèle instancié obtenu.

Le modèle instancié obtenu de l'ensemble propulsif est caractérisé par les données extraites des modèles spécifiques de la nacelle et du moteur. Ce modèle instancié peut être utilisé dans un logiciel de conception tel que Catia.

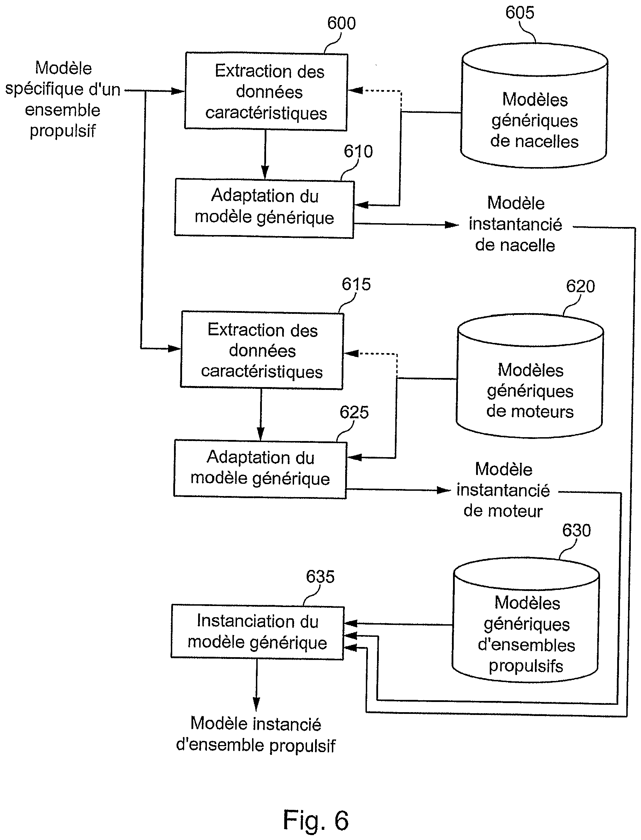

La figure 6 illustre un autre exemple dans lequel un modèle instancié d'une nacelle, un modèle instancié d'un moteur et un modèle instancié d'un ensemble propulsif sont obtenus à partir d'un modèle spécifique d'un ensemble propulsif. Selon l'étape 600, les courbes, ou profils, et les points caractéristiques d'une nacelle sont extraits du modèle spécifique d'un ensemble propulsif. Les courbes et les points caractéristiques de la nacelle peuvent être déterminés par l'utilisateur selon les paramètres du modèle générique utilisé de la nacelle, choisi par l'utilisateur dans une base de données 605, ou peuvent être déterminés automatiquement selon ce modèle. Le modèle générique de nacelle sélectionné est ensuite adapté aux données caractéristiques extraites du modèle spécifique de l'ensemble propulsif (étape 610). L'adaptation du modèle générique aux courbes extraites du modèle spécifique de l'ensemble propulsif est, de préférence, réalisée selon la méthode décrite précédemment, par référence à la figure 3. L'adaptation du modèle générique de nacelle avec les données extraites du modèle spécifique d'ensemble propulsif donne un modèle instancié de nacelle.

De même, selon l'étape 615, les courbes, ou profils, et les points caractéristiques d'un moteur sont extraits du modèle spécifique de l'ensemble propulsif. Les courbes et les points caractéristiques du moteur peuvent être déterminés par l'utilisateur selon les paramètres du modèle générique utilisé du moteur, choisi par l'utilisateur dans une base de données 620, ou peuvent être déterminés automatiquement selon ce modèle. Le modèle générique de moteur sélectionné est ensuite adapté aux données caractéristiques extraites du modèle spécifique de l'ensemble propulsif (étape 625). L'adaptation du modèle générique aux courbes extraites du modèle spécifique de l'ensemble propulsif est également, de préférence, réalisée selon la méthode décrite précédemment, par référence à la figure 3. L'adaptation du modèle générique d'un moteur avec les données extraites du modèle spécifique de l'ensemble propulsif donne un modèle instancié de moteur.

Les données des modèles instanciés de la nacelle et du moteur peuvent être exportées pour être utilisées dans un autre modèle générique. Ainsi, l'utilisateur peut sélectionner un modèle générique d'un ensemble propulsif dans une base de donnée 630 et importer les données des modèles instanciés de la nacelle et du moteur déterminés précédemment pour instancier le modèle générique de l'ensemble propulsif (étape 635).

## Revendications

1. Procédé d'aide à la modélisation géométrique d'un premier objet à partir d'un modèle générique dudit premier objet et d'au moins un modèle spécifique d'au moins un second objet comprenant au moins une partie dudit premier objet, le procédé comprenant les étapes suivantes,
- acquisition dudit modèle générique (210) dudit premier objet ;
- acquisition dudit au moins un modèle spécifique (200) dudit au moins un second objet ;
- extraction d'au moins une donnée dudit au moins un modèle spécifique selon au moins un paramètre dudit modèle générique (205) ; et,
- construction (215) d'un modèle instancié dudit premier objet à partir dudit modèle générique et de ladite au moins une donnée extraite dudit au moins un modèle spécifique, le procédé étant **caractérisé en ce que** ladite au moins une donnée extraite est une portion de courbe (305) et **en ce qu'**il comprend en outre les étapes suivantes,
- détermination des extrema (E'₁ à E'₅) de ladite portion de courbe extraite dudit au moins un modèle spécifique ; et,
- adaptation de la portion de courbe (300) dudit modèle générique correspondant à ladite portion de courbe (305) extraite dudit au moins un modèle spécifique de telle sorte que les extrema (E₁ à E₅) de ladite portion de courbe dudit modèle générique soient similaires aux extrema (E'₁ à E'₅) de ladite portion de courbe extraite dudit au moins un modèle spécifique, ladite étape d'adaptation comprenant en outre une étape de détermination de l'angle et de la tension d'au moins une tangente à ladite portion de courbe extraite dudit au moins un modèle spécifique en au moins un point de ladite portion de courbe dudit modèle générique.

2. Procédé selon la revendication 1 **caractérisé en ce que** ledit au moins un paramètre dudit modèle générique est adapté à ladite au moins une donnée extraite dudit au moins un modèle spécifique pour construire ledit modèle instancié.

3. Procédé selon la revendication 1 ou la revendication 2 **caractérisé en ce que** ledit modèle générique est un modèle dynamique et **en ce que** ledit au moins un modèle spécifique est un modèle statique.

4. Procédé selon la revendication 1 **caractérisé en ce que** ladite étape d'adaptation comprend en outre une étape d'ajustement d'au moins un point intermédiaire (I₁ à I₆) situé entre lesdits extrema (E1 à E5) de ladite portion de courbe dudit modèle générique.

5. Procédé selon l'une quelconque des revendications précédente **caractérisé en ce que** ledit au moins un second objet correspond audit premier objet ou est une partie dudit premier objet.

6. Procédé selon l'une quelconque des revendications précédente caractérisé en qu'il comprend en outre une étape d'importation (410) d'au moins une donnée, ladite donnée importée étant mémorisée comme paramètre dudit modèle instancié.

7. Procédé selon l'une quelconque des revendications précédentes **caractérisé en ce que** ledit premier objet est un objet 3D.

8. Procédé selon la revendication 7 **caractérisé en ce que** ledit premier objet est une nacelle, un moteur ou un ensemble propulsif.

9. Dispositif comprenant des moyens adaptés à la mise en oeuvre de chacune des étapes du procédé selon l'une quelconque des revendications 1 à 8.

10. Programme d'ordinateur comprenant des instructions adaptées à la mise en oeuvre de chacune des étapes du procédé selon l'une quelconque des revendications 1 à 8.

## Patentansprüche

1. Verfahren zur Unterstützung der geometrischen Modellierung eines ersten Objekts ausgehend von einem generischen Modell des ersten Objekts und mindestens einem spezifischen Modell mindestens eines zweiten Objekts, das mindestens einen Teil des ersten Objekts aufweist, wobei das Verfahren die folgenden Schritte aufweist,
- Erfassen des generischen Modells (210) des ersten Objekts;
- Erfassen des mindestens einen spezifischen Modells (200) des mindestens einen zweiten Objekts;
- Extrahieren mindestens eines Datums des mindestens einen spezifischen Modells gemäß mindestens einem Parameter des generischen Modells (205) und
- Erstellen (215) eines instanziierten Modells des ersten Objekts ausgehend von dem generischen Modell und dem mindestens einen Datum, das aus dem mindestens einen spezifischen Modell extrahiert wird,
wobei das Verfahren **dadurch gekennzeichnet ist, dass** mindestens ein extrahiertes Datum ein Kurvenabschnitt (305) ist und dass es ferner die folgenden Schritte aufweist,
- Bestimmen der Extremwerte (E'₁ bis E'₅) des Kurvenabschnitts, der aus dem mindestens einen spezifischen Modell extrahiert wird, und
- Anpassen des Kurvenabschnitts (300) des generischen Modells, der dem Kurvenabschnitt (305) entspricht, der aus dem mindestens einen spezifischen Modell extrahiert wird, derart, dass die Extremwerte (E₁ bis E₅) des Kurvenabschnitts des generischen Modells den Extremwerten (E'₁ bis E'₅) des Kurvenabschnitts, der aus dem mindestens einen spezifischen Modell extrahiert wird, ähnlich sind,
wobei der Schritt des Anpassens ferner einen Schritt des Bestimmens des Winkels und der Spannung von mindestens einer Tangente an dem Kurvenabschnitt aufweist, der aus dem mindestens einen spezifischen Modell an mindestens einem Punkt des Kurvenabschnitts des generischen Modells extrahiert wird.

2. Verfahren nach Anspruch 1, **dadurch gekennzeichnet, dass** der mindestens eine Parameter des generischen Modells an das mindestens eine Datum angepasst wird, das aus dem mindestens einen spezifischen Modell extrahiert wird, um das instanziierte Modell zu erstellen.

3. Verfahren nach Anspruch 1 oder 2, **dadurch gekennzeichnet, dass** das generische Modell ein dynamisches Modell ist und dadurch, dass das mindestens eine spezifische Modell ein statisches Modell ist.

4. Verfahren nach Anspruch 1, **dadurch gekennzeichnet, dass** der Schritt des Anpassens ferner einen Schritt des Angleichens mindestens eines Zwischenpunktes (I1 bis I6) aufweist, der zwischen den Extremwerten (E1 bis E5) des Kurvenabschnitts des generischen Modells angeordnet ist.

5. Verfahren nach einem der vorhergehenden Ansprüche, **dadurch gekennzeichnet, dass** das mindestens eine zweite Objekt dem ersten Objekt entspricht oder ein Teil des ersten Objekts ist.

6. Verfahren nach einem der vorhergehenden Ansprüche, **dadurch gekennzeichnet, dass** es ferner einen Schritt des Importierens (410) von mindestens einem Datum aufweist, wobei das importierte Datum als Parameter des instanziierten Modells gespeichert wird.

7. Verfahren nach einem der vorhergehenden Ansprüche, **dadurch gekennzeichnet, dass** das erste Objekt ein 3D-Objekt ist.

8. Verfahren nach Anspruch 7, **dadurch gekennzeichnet, dass** das erste Objekt eine Gondel, ein Motor oder eine Antriebseinheit ist.

9. Vorrichtung, umfassend Mittel, die für das Ausführen von jedem der Schritte des Verfahrens nach einem der Ansprüche 1 bis 8 geeignet sind.

10. Computerprogramm, das Anweisungen aufweist, die für das Ausführen von jedem der Schritte des Verfahrens nach einem der Ansprüche 1 bis 8 geeignet sind.

## Claims

1. Method for aiding the geometric modelling of a first object on the basis of a generic model of said first object and of at least one specific model of at least one second object comprising at least one part of said first object, the method comprising the following steps,
- acquisition of said generic model (210) of said first object;
- acquisition of said at least one specific model (200) of said at least one second object;
- extraction of at least one datum from said at least one specific model according to at least one parameter of said generic model (205); and,
- construction (215) of an instantiated model of said first object on the basis of said generic model and of said at least one datum extracted from said at least one specific model,
the method being **characterised in that** said at least one extracted datum is a curve portion (305) and **in that** it furthermore comprises the following steps,
- determination of the extrema (E'₁ to E'₅) of said curve portion extracted from said at least one specific model; and,
- adaptation of the curve portion (300) of said generic model corresponding to said curve portion (305) extracted from said at least one specific model in such a way that the extrema (E₁ to E₅) of said curve portion of said generic model are similar to the extrema (E'₁ to E'₅) of said curve portion extracted from said at least one specific model,
said adaptation step furthermore comprising a step of determining the angle and the tension of at least one tangent to said curve portion extracted from said at least one specific model at at least one point of said curve portion of said generic model.

2. Method according to claim 1, **characterised in that** said at least one parameter of said generic model is adapted to said at least one datum extracted from said at least one specific model to construct said instantiated model.

3. Method according to claim 1 or claim 2, **characterised in that** said generic model is a dynamic model and **in that** said at least one specific model is a static model.

4. Method according to claim 1, **characterised in that** said adaptation step furthermore comprises a step of adjusting at least one intermediate point (I1 to 16) situated between said extrema (E1 to E5) of said curve portion of said generic model.

5. Method according to any one of the preceding claims, **characterised in that** said at least one second object corresponds to said first object or is a part of said first object.

6. Method according to any one of the preceding claims, **characterised in that** it furthermore comprises a step (410) of importing at least one datum, said imported datum being stored as parameter of said instantiated model.

7. Method according to any one of the preceding claims, **characterised in that** said first object is a 3D object.

8. Method according to claim 7, **characterised in that** said first object is a nacelle, an engine or a propulsive assembly.

9. Device comprising means adapted for the implementation of each of the steps of the method according to any one of claims 1 to 8.

10. Computer program comprising instructions adapted for the implementation of each of the steps of the method according to any one of claims 1 to 8.
